# EUROPEAN PATENT SPECIFICATION

(11) **EP 1 783 103 B1**
(45) Date of publication and mention of the grant of the patent: **24.08.2011**
(21) Application number: 05765431.1
(22) Date of filing: 29.06.2005
(51) Int. Cl.: C03B 20/00, C03B 11/00

(54) **METHOD FOR FORMING QUARTZ GLASS**
VERFAHREN ZUM FORMEN VON QUARZGLAS
PROCÉDÉ DE FABRICATION DE VERRE DE QUARTZ

(30) Priority: 02.07.2004 JP 2004197289
(43) Date of publication of application: 09.05.2007
(73) Proprietor: NIKON CORPORATION, Chiyoda-ku Tokyo 100-8331 (JP)
(72) Inventor: ABE, Tetsuya, Tokyo 1008331 (JP); YAJIMA, Shouji, Tokyo 1008331 (JP)
(74) Representative: Viering, Jentschura & Partner
(86) International application number: PCT/JP2005/011909
(87) International publication number: WO 2006/003912

(56) References cited:
- EP-A2- 0 968 969
- JP-A- 8 151 220
- JP-A- 2000 219 523
- JP-A- 2004 307 264
- JP-U- 2 074 331
- US-A1- 2003 056 542
- US-A1- 2003 061 833

## Description

### Technical Field

The present invention relates to a method of molding a silica glass, and, in more details, relates to a method of molding a silica glass in a predetermined form by accommodating the silica glass in a mold, and pressing it while heating.

### Background of the Invention

In order to transfer an integrated circuit pattern such as an IC and an LSI, a projection exposure apparatus (or a photolithography apparatus) is mainly used. A wide exposure area and a higher resolution are required for the projection optical system used in such an apparatus with an increase in the integration degree of the integrated circuit. Thus, reduction in an exposure wavelength has been pursued to improve the resolution of the projection optical system.

Specifically, the exposure wavelength of the excimer laser has been reduced from the g beam (436 nm), to the i beam (365 nm), to the KrF (248 nm), and to the ArF (193 nm). To pursue a further increased integration degree, a method in which the F₂ (157 nm) excimer laser, an X-ray, or an electron beam is used as a light source is now discussed. In such circumstances, a downsized projection exposure apparatus using the F₂ excimer laser which can be manufactured utilizing the conventional design concept has suddenly been spotlighted.

Meanwhile, the silica glass is extensively used as a material for an optical member such as a lens, a mirror, and a reticle of the illumination optical system or projection optical system of the projection exposure apparatus using a light source having wavelength shorter than the i beam. The silica glass is synthesized by such as a direct method, for example, flame hydrolysis in which a transparent silica glass is produced.

In the direct method, a combustion supporting gas (oxygen containing gas, for example, oxygen gas) and combustible gas (hydrogen containing gas, for example, hydrogen gas or natural gas) are mixed and burned with a burner made of silica glass. A high purity silicon compound (for example, silicon tetrachloride gas) as a raw gas is diluted by a carrier gas (usually oxygen gas), and is jetted from the center of the burner. Then, the raw gas is reacted (hydrolyzed) by burning the combustion supporting gas and combustible gas therearound to form fine particles of silica glass. The fine particles of the silica glass are deposited on a target comprised of an opaque silica glass plate which is located beneath the burner to be turned, shaken, and pulled down. At the same time, the particles of silica glass are melted and vitrified by the combustion heat of the combustion supporting gas and combustible gas to obtain an ingot of the silica glass.

This method allows the ingot of the silica glass having a relatively large diameter to be easily obtained. Therefore, it is possible to cut the ingot into blocks to produce an optical member having a desired shape and size.

In recent years, in order to obtain an optical member having a larger surface area such as a large sized lens and reticle or a large sized liquid crystal display, a molding method is utilized in which the previously formed silica glass such as in an ingot is formed in a flattened shape by molding by heat and press to have a larger surface area.

By such a method, the silica glass is molded by pressing it with a pressing portion while accommodated in a mold and heated therein. Then, it is gradually cooled in the mold, and further annealed to obtain a molded body having an enlarged opposed area and a predetermined form. Japanese Unexamined Patent Application Publication No. Sho 61-83638 (document 1) proposes, as such a heating and pressing molding method, a method of molding a silica glass by pressing it while heating at 1600°C to 1700°C using a mold made of graphite having a structure which mitigates a stress that is caused by difference in ratios of thermal expansion between the silica glass and the material of the mold. In addition, Japanese Unexamined Patent Application Publication No. Sho 56-129621 (document 2) and Japanese Unexamined Patent Application Publication No. Sho 57-67031 (document 3) propose a method of molding a silica glass by pressing it while heating at a high temperature of 1700°C or more using the molding apparatus having longitudinal type structure in which the mold made of graphite has two or more partitions. Furthermore, Japanese Unexamined Patent Application Publication No. 2002-220240 (document 4) proposes a method of molding a silica glass by pressing it by providing a covering layer made of a silica powder to the inner surface of a mold made of graphite. In an example thereof, disclosed is a method in which the silica glass is molded by heating it at 1650°C, and pressing it at 1 kg/cm².

US2003/0061833 provides a method of molding silica glass by pressing it at 10 kPa to 500 kPa, for example 100 kPa. The silica glass is heated to 50 K to 170 K above its softening point of 1600°C.

### Disclosure of the Invention

However, the conventional heating and pressing molding method has a problem that the laser resistance of the silica glass is easily reduced due to the reduction in the amount of hydrogen molecule dissolved in the silica glass, and a problem that impurities which have penetrated the mold are mixed into the silica glass, and the silica glass reacts with the graphite of the mold to form silicon carbide, and thereby a thickness of affected layer is increased, and a homogeneity of the silica glass is reduced, therefore resulting in a production of the silica glass having a large birefringence. Furthermore, there is a problem that the yield is reduced due to the breakage of the silica glass and the mold caused by an increased stress that is generated during cooling based on the difference in coefficients of linear expansion between the silica glass and the mold.

As described above, by the conventional heating and pressing molding method, the silica glass having an excellent laser resistance, a small thickness of the affected layer, and a small birefringence has not been obtained yet.

It is an object of the present invention to provide a method of molding a silica glass which makes it possible to obtain, surely and with high efficiency, the silica glass having an excellent laser resistance, a reduced thickness of an affected layer, and a small birefringence by reducing a time for which the silica glass is exposed to high temperatures.

The present inventors have devoted themselves to repeat studies so as to achieve the above object. As a result, they have discovered that the above problems occur because the conventional heating and pressing molding method causes the silica glass to be exposed to high temperature for a long period of time through the molding step, and that the use of the silica glass containing OH groups in a concentration of 900 to 1300 ppm by mass reduces a viscosity of the silica glass, and thereby makes it possible to mold the silica glass with high efficiency within a relatively low temperature range of 1530°C to 1630°C and within a maximum pressure range of 19.6kPa (0.2 Kg/cm²) to 78.4kPa (0.8 Kg/cm²), thus resulting in the achievement of the above object and the completion of the present invention.

The method of molding the silica glass according to the present invention comprises:
a first step of accommodating the silica glass containing the OH groups in a concentration of 900 ppm to 1300 ppm by mass in a hollow portion of a mold provided with a press portion;
a second step of molding the silica glass into a predetermined form by pressing the same by means of the press portion so that a maximum pressure can be 19.6kPa (0.2 Kg/cm²) to 78.4kPa (0.8 Kg/cm²) while heating the silica glass so that the temperature of the same can be within a hold temperature range of 1530°C to 1630°C; and
a third step of cooling the molded silica glass.

In the method of molding a silica glass according to the present invention, in the second step, the pressures applied at an early stage at which a height displacement of a silica glass is within a range of 0% to 50%, at an intermediate stage at which the same is within a range of 50% to 80%, and at a final stage at which the same is within a range of 80% to 100%, are preferably increased in a stepwise fashion so as to be 7% to 25%, 25% to 60%, and 60% to 100% of the maximum pressure, respectively.

In the second step, the hollow portion is more preferably under an inert gas atmosphere.

In the method of molding a silica glass according to the present invention, in the third step, a cooling rate within a temperature range of the hold temperature to 1200°C is preferably 2°C/min to 3.5°C/min.

Furthermore, in the method of molding a silica glass according to the present invention, in the third step, the cooling rate within a temperature range of 1200°C to 800°C is more preferably 1°C/min to 8°C/min.

Furthermore, in the method of molding a silica glass according to the present invention, in the third step, the cooling rate within a temperature range of 800°C to 100°C is more preferably 4°C/min to 15°C/min.

The method of molding a silica glass according to the present invention preferably further comprises a pretreatment step of preheating the silica glass so that the temperature of the silica glass can be within a temperature range of 200°C to 300°C before accommodating the silica glass in the hollow portion of the mold.

Note that, the reason why the above problems are solved is not necessarily apparent in the method of molding a silica glass according to the present invention. However, the inventors suppose as follows. That is, the use of the silica glass containing OH groups in a concentration of 900 ppm to 1300 ppm by mass reduces a viscosity at a high temperature, and thereby makes it possible to mold it within the relative low temperature range of 1530°C to 1630°C, and within the maximum pressure range of 19.6kPa (0.2 Kg/cm²) to 78.4 kPa(0.8 Kg/cm²). Therefore, it is possible to reduce the time for which the silica glass is exposed to high temperatures throughout the molding step such as during raising and lowering temperatures and during molding, and thereby the amount of hydrogen molecules are difficult to be reduced. It is therefore supposed that the silica glass having an excellent laser resistance can be molded, and also the silica glass having a small thickness of affected layer and a small birefringence can surely be obtained with high efficiency.

The present invention makes it possible to provide a method of molding a silica glass in which the time for which the silica glass is exposed to high temperatures can be reduced, and thereby the silica glass having an excellent laser resistance, the reduced thickness of the affected layer, and the small birefringence can be obtained surely and with high efficiency, although it is a method of molding a silica glass by pressing it while heating.

### Brief description of the Drawing

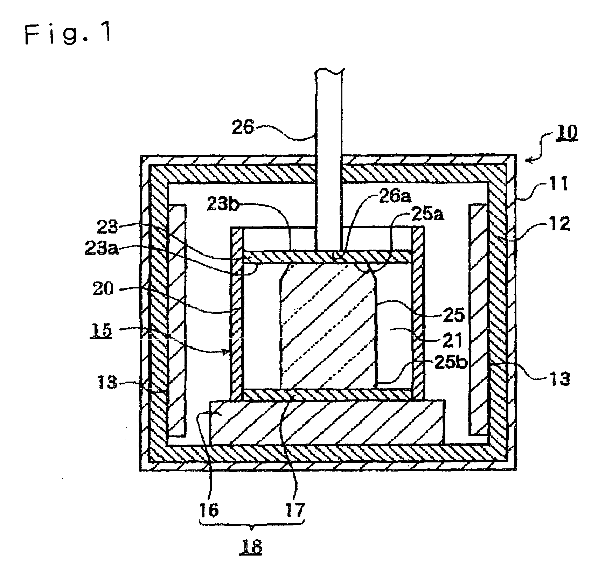

Fig. 1 is a schematic longitudinal sectional view showing an embodiment of a molding apparatus suitable for implementing a method of molding a silica glass according to the present invention.

### Detailed Description of Preferred Embodiment

A method of molding a silica glass according to the present invention is hereinafter described in detail with reference to the drawing based on the suitable embodiment.

Fig. 1 is a schematic longitudinal sectional view showing an embodiment of a molding apparatus suitable for implementing a method of molding a silica glass according to the present invention.

In the molding apparatus 10 shown in Fig. 1, a thermal insulator 12 mounted on the entire inner wall of a metallic vacuum chamber 11, and a carbon heater 13 as heating means mounted on the longitudinal wall of the thermal insulator 12 are provided. Further a mold 15 is accommodated in the approximately central portion of the interior of the vacuum chamber 11.

The mold 15 is provided with a bottom section 18 provided with a bottom plate 16 and a receiving plate 17, and a side wall section 20 formed in a cylindrical form above the bottom section 18. A hollow portion 21 is defined by the cylindrical side wall section 20 and the bottom section 18.

A top plate 23 having the shape corresponding to that of the hollow portion 21 as a press portion is disposed in the hollow portion 21, and can be moved to the side of the bottom portion 18 of the mold 15 by pressing a press surface (top surface) 23b of the top plate 23 by means of a cylinder rod 26 of a hydraulic cylinder (not shown) mounted outside the vacuum chamber 11 as a press apparatus.

Note that, the hydraulic cylinder provided with the cylinder rod 26, which is constructed so as to be pressed to move by adjusting the oil pressure supplied from the outside, is omitted from the detailed drawing. The press apparatus which can be used in the present invention is not limited to a hydraulic press apparatus. Conventional known types of a press apparatus such as a water hydraulic type and a mechanical type can also be used.

The mold 15 and top plate 23 have resistance to the heat and strength to the pressure which are applied during molding the silica glass 25, and are formed of a material which is hard for impurities to getting mixed in with the silica glass 25 even if contacting with the silica glass 25 during molding. Graphite is preferably used as such a material.

The silica glass 25 accommodated in the hollow portion 21 of the mold is a synthetic silica glass in a block form which is previously synthesized by using a various types of production methods, and contains dissolved OH groups in a concentration of 900 ppm to 1300 ppm by mass in the silica glass. The silica glass having less than the lower limit of the above concentration range of the OH groups has a high viscosity of the silica glass when a temperature of the entire silica glass is within a temperature range of 1630°C or less, and cannot therefore be molded. On the other hand, when a concentration of the OH groups exceeds the upper limit, the viscosity of the silica glass is low, and thereby the surface of the glass bends inside, and thereby is entangled. As a result, many inferior portions tend to be caused. Of the silica glasses containing such dissolved OH groups in a concentration of 900 ppm to 1300 ppm by mass are preferable block silica glasses such as an ingot or a part thereof of the synthetic silica glass which is synthesized from silicon compounds as a raw material such as silicon tetrachloride, silane, and organic silicon, or an ingot or a part thereof of the synthetic silica glass to which components such as Ge, Ti, B, F, and Al which vary the refractive index thereof are added.

Subsequently, using such a molding apparatus 10, description will be made about a suitable method of molding the silica glass 25 according to the present invention.

First, a mold 15 is formed by combining a bottom plate 16, a receiving plate 17, and a side wall section 20 in a vacuum chamber 11. And the block silica glass 25 is placed in a hollow portion 21 of the mold 15. The silica glass 25 mentioned here is the one described above. The block silica glass 25 accommodated in the mold 15 is preferably preheated so that the inside thereof is approximately uniformly heated in advance within a temperature range of 200°C to 300°C using a heating means (not shown)(pretreatment step). The preheating is performed at a temperature increasing rate of 10°C/min to 20°C/min. This rate is maintained for a period of time of, for example, 10 to 20 minutes in which the silica glass 25 is sufficiently heated to the inside thereof at a predetermined temperature within a temperature range of 200°C to 300°C. Such a heating means specifically includes an inert oven provided with a container, the interior of which can be made air-sealed, and replaced with an inert gas, as well as a heater equipped with a temperature adjuster. It is possible to reduce the heating time in the mold 15 by preheating the silica glass in the above manner. In particular, this is because if the preheating temperature is 200°C to 300°C, an amount of hydrogen molecules in the silica glass 25 tend to be hardly reduced during heating.

After the block silica glass 25 is accommodated in the hollow portion 21 of the mold, a top plate 23 is disposed above the block silica glass 25, and a hydraulic cylinder is set such that a press portion 26a of a cylinder rod 26 abuts a press surface 23b of the top plate 23 (first step). Then, a pressure in the vacuum chamber 11 is preferably reduced to 1 Pa to 10 Pa (preferably 1 Pa) using a vacuum pump to fill an inert gas (for example, pure nitrogen gas) in the vacuum chamber 11 so as to show 105 kPa to 120 kPa.

Next, by using a carbon heater 13, the silica glass 25 accommodated in the mold 15 and the hollow portion 21 thereof are heated so that they are maintained within a hold temperature range of 1530°C to 1630°C. Less than the lower limit of the hold temperature for the silica glass causes the viscosity of the silica glass to be too high to perform molding. On the other hand, more than the upper limit increases the time for which the silica glass is exposed to high temperatures throughout the processes of increasing temperature and cooling. Such a heating is preferably performed as follows. That is, after the heating temperature is increased from the aforementioned preheating temperature to the predetermined temperature within the foregoing hold temperature range at a temperature increasing rate of 500°C/hr to 800°C/hr by causing the carbon heater 13 to generate heat, the predetermined temperature within the foregoing hold temperature range is maintained for a time period (for example, 15 minutes to 60 minutes) in which the block silica glass 25 is sufficiently heated to the inside thereof so that the temperature of the block silica glass 25 is approximately uniformly increased to the inside thereof at a hold temperature of 1530°C to 1630°C. Next, while the silica glass 25 is maintained at the hold temperature after being heated, the cylinder rod 26 is moved downward by controlling the oil pressure applied to the hydraulic cylinder so that the press surface 23b of the top plate 23 is pressed by the press portion 26a of the cylinder rod 26. The top plate 23 is thereby moved in the press direction, that is, toward the bottom portion 18 of the mold 15 so that the block silica glass 25 is press-molded between the press surface 23a of the top plate 23 and the bottom portion 18 (the second step). In the present invention, a maximum pressure for pressing the silica glass in this manner is necessary to be 0.2 kg/cm² to 0.8 kg/cm². Less than the lower limit of the maximum pressure is too low to deform the glass. It is therefore difficult to mold the glass conforming to the form of the mold, particularly resulting in increased R (curvature radius) at the corner. On the contrary, when the maximum pressure exceeds the upper limit, the thickness of a decomposition phase is increased. Application of the maximum pressure allows the silica glass 25 to be surely molded in the desired form, and the reduction in a time for molding the silica glass 25 to be achieved.

In such a process of pressing, the pressure applied by the top plate 23 is small at early stage of molding, and preferably then is increased so as to be largest at the final stage to perform pressing. For example, the pressure applied may gradually be increased as the top plate 23 is moved down. In addition, the small pressure at the early stage may be used to perform pressing until the molding is advanced to a predetermined degree, and then may be increased to a predetermined pressure. Furthermore, the stepwise increase in pressure may be selected. In this case, if the height direction position of the top 25a of the pre-mold silica glass 25 (that is, the position in which the press surface 23a of the top plate 23 contacts with the top 25a of the pre-mold silica glass 25) is considered to be at 0% of displacement (deformation ratio), and if the height direction position of the top of the silica glass 25 in a case where the silica glass 25 has normally been molded without unmolded portion is considered to be at 100% of displacement (deformation ratio), a small pressure equivalent to the pressure at the early stage of molding can be used to perform pressing when the height displacement of the silica glass 25 is within a range of, for example, 0% to 80%, preferably 0% to 50%. Such a stepwise increase in pressure for pressing the silica glass 25 allows more uniform molding of the silica glass.

At the early stage of molding, that is, at the stage at which the height displacement of the silica glass 25 is within 0% to 50%, the area in which the silica glass contacts with the top plate 23 is small, and the volume which is deformed by pressing is also small. Therefore, a small pressure can be used to perform pressing. The preferable range of pressure for this pressing varies depending on the state of the silica glass 25, and therefore it is preferable to suitably select the pressure at the time of molding. It is preferable to use 7% to 25% of the foregoing maximum pressure to perform pressing. For example, the pressure can be controlled so that a rate of the downward movement of the top plate 23 can be within a range of 0.1 mm/min to 8 mm/min to perform pressing.

The reason why small pressure is applied at the early stage of molding to perform pressing is that the application of large pressure forces the silica glass 25 to be deformed, and resulting in tendency of the silica glass 25 to be molded without uniformity, since the silica glass 25 is easy to deform at the early stage of molding, and the displacement to the side of the top 25a of the silica glass 25 therefore is large.

At the intermediate stage of molding, that is, at the stage at which the height displacement of the silica glass 25 is within a range of 50% to 80%, the silica glass 25 is so spread in the hollow portion 21 of the mold 15 that the silica glass 25 is pressed by the large area thereof in the press surface 23a of the top plate 23. At such an intermediate stage of molding, although the deformation of the silica glass 25 is small, the silica glass contacts with the press surface 23a in the large area thereof, resulting in the necessity of large force to deform the silica glass 25. Therefore, at the intermediate stage of the molding, the pressure applied on the silica glass 25 from the press surface 23a of the top plate 23 is preferably increased so as to be 25% to 60% of the maximum pressure described below to perform pressing. Application of such a pressure allows the silica glass 25 to uniformly be molded, and, at the same time, to be deformed by the silica glass 25 in a short time, resulting in the tendency of a reduced molding time to be achieved.

At the final stage of molding, that is, at the stage at which the displacement of height direction position is within a range of 80% to 100%, the silica glass 25 is spread in the approximately entire area in the cross-sectional direction of the hollow portion 21 of the mold 15, and therefore the pressing is performed using the approximately entire area of the press surface 23a of the top plate 23. At such a final stage of molding, the pressure applied from the press surface 23a of the top plate 23 is preferably controlled so as to be 60% to 100% of the foregoing maximum pressure to perform pressing from a point of view that pressure as high as possible is applied within a pressure range which can prevent the silica glass 25 and the mold 15 from being damaged. The maximum pressure is more preferably controlled so as to be 29.4 kPa (0.3 Kg/cm²) to 78.4 kPa (0.8 Kg/cm²) to perform pressing from a point of view that the molding time is reduced further.

Then, the pressing by means of the top plate 23 is ended at the stage at which the silica glass 25 is molded in the predetermined plate form. Subsequently, while disposed in the hollow portion 21 of the mold 15, the molded silica glass is cooled (third step).

In a cooling process, cooling is preferably forced to be performed at a higher cooling rate than that at which standing to cool is performed after heating with the carbon heater 13 is stopped in the mold 15. As such a cooling method, a usual method can be used, but it is specifically limited. For example, a method in which a pathway for a cooling medium to pass is mounted in the vacuum chamber 11 for cooling can be included. Such a cooling allows reduction in the time for which the molded silica glass is exposed to high temperatures.

In such a cooling process, while the temperature of the molded silica glass is within a temperature range of the foregoing hold temperature to 1200°C, cooling is preferably performed at a cooling rate of 2°C/min to 3.5°C/min. Less than the lower limit of such a cooling rate causes the time for which the silica glass is exposed to high temperatures to be so increased that the thickness of the affected layer tends to be increased. On the contrary, more than the upper limit causes the molded glass to tend to be broken with high possibility. Such cooling conditions allows the time for which the silica glass is exposed to high temperatures to be reduced, and furthermore a leading time to be reduced.

In the cooling process, while the temperature of the molded silica glass is within a temperature range of 1200°C to 800°C, slow cooling is preferably gradually performed at a cooling rate of 1°C/min to 8°C/min until the temperature of the entire silica glass is reduced to 800°C from a point of view that the strain of the silica glass should be reduced. Less than the lower limit of such a cooling rate allows the strain of the silica glass to easily be reduced, but causes cooling time to be so increased that the time for which the silica glass is exposed to high temperatures tends to be increased in excess. On the contrary, more than the upper limit causes the strain to be increased, and the possibility for the glass to tend to be broken to be increased. Note that, the cooling rate is preferably adjusted depending on various kinds of molding conditions in each of the temperature ranges.

In the cooling process, in the process in which cooling is continued until the temperature of the entire molded silica glass is reduced to a temperature range of 80C°C to 100°C, cooling is preferably performed at a cooling rate of 4°C/min to 15°C/min. Less than the lower limit of such a cooling rate causes the time for which the silica glass is exposed to high temperatures to be so increased that the thickness of the affected layer tends to be increased. On the contrary, more than the upper limit causes the molded glass to tend to be broken with high possibility. Such cooling conditions allows the time for which the silica glass is exposed to high temperatures to be reduced, and furthermore a leading time to be reduced. Note that, as a cooling method, the method same as that described above can be used.

At the stage at which the temperature of the silica glass 25 is sufficiently reduced by using such a cooling method, the molded silica glass (plate form, block and the like) is taken out of the vacuum chamber 11.

By using the above described molding method of the present invention to mold the silica glass 25, the viscosity of the silica glass at high temperatures is reduced, and thereby it is possible to mold the silica glass within a relatively low temperature range of 1530°C to 1630°C. As a result, it is possible to reduce the times for raising and lowering temperature. In addition, it is possible to reduce the molding time by using the foregoing range of the maximum pressure in the molding step. These therefore allow the time for which the silica glass 25 is exposed to high temperatures to be reduced in a synergistic manner. The amount of hydrogen molecules in the silica glass are thereby prevented from being so reduced that the laser resistance thereof is improved.

Such a possibility to reduce the time for which the silica glass 25 is exposed to high temperatures prevents impurities from being mixed in the silica glass 25, and the silica glass 25 from reacting with the graphite of the mold 15. Furthermore, the difference in heat contraction occurred during cooling based on the difference in the coefficient of linear expansion between the silica glass 25 and the mold 15 is reduced corresponding to the reduction in the molding temperature, resulting in reduction in the stress which the mold 15 applies when compressing the silica glass 25 during cooling. Therefore, the silica glass which has a thin affected layer and a small birefringence can be obtained surely and with high efficiency.

Note that, the silica glass molded by the molding method of the present invention is used as various kinds of optical members, and preferably used as a material used to produce lenses, mirrors, a substrate for a reticle or the like on which a laser with a wavelength of 250 nm or less is irradiated. It is also particularly preferably used as a plate-like body having a large area used in a substrate for a reticle (photomask) such as a mask for a large-sized liquid crystal, a mask for a semi conductor and the like, and in the material of a large-sized lens of imaging optics, and as other large-sized glass block.

### Example

The present invention will hereinafter more specifically be described below based on examples and comparative examples, but is not intended to be limited to the following examples.

### (Example 1)

Using a molding apparatus shown in foregoing Fig.1, a block silica glass 25 which contains the OH groups in a concentration of 1300 ppm by mass, and is comprised of a synthetic silica glass ingot 50 cm in diameter, and 70 cm in height was molded in the form of a 100 cm square plate having a thickness of 13.7 cm.

That is, in Example 1, before accommodated in the mold 15, the silica glass 25 was first preheated so as to be at 300°C. Therefore, the silica glass 25 was accommodated in the hollow portion 21 of the mold 15, and the top plate 23 was set. Subsequently, the pressure in the vacuum chamber 11 was reduced to 10 Pa using a vacuum pump, and pure nitrogen gas was filled so that the pressure was increased to 110 kPa. In the step of heating the silica glass, the temperature in the molding apparatus was increased to 1600°C at a temperature increasing rate of 400°C/hour. A hold temperature of 1600°C was maintained for 30 minutes to increase the temperature of the entire silica glass to the hold temperature.

Then, the top plate 23 was pressed with a cylinder rod 26. At the early stage at which the height displacement of the silica glass was 0% to 50%, a pressure of 14.7 kPa (0.15 Kg/cm²) was applied to press the top plate 23. At the intermediate stage at which the displacement was 50% to 80%, a pressure of 24.5 kPa (0.25 kg/cm²) was applied. At the final stage at which the displacement was 80% to 100%, a pressure of 49 kPa (0.5 Kg/cm²) to 78.4 kPa (0.8 Kg/cm²) was applied. In these steps, the pressures were increased in stepwise manner. In the end, the molding was performed by applying the maximum pressure of 78.4 kPa (0.8 kg/cm²) to press the silica glass 25.

After molding, heat development by the carbon heater 13 was stopped, and the silica glass 25 was left standing for 20 hours to cool. Thus, a plate-like body of the silica glass 25 was obtained. Note that, the cooling rate used in the cooling step was generally as shown in Table 1.

### (Example 2)

The plate-like body of the silica glass 25 was obtained in the same manner as that of Example 1 except that, in the step of cooling the molded silica glass, cooling rates were controlled to be 3°C/min within a temperature range of 1600°C to 1200°C, 3°C/min within 1200°C to 800°C, and 10°C/min within 800°C to 100°C to force the silica glass to cool.

### (Example 3)

The plate-like body of the silica glass 25 was obtained in the same manner as that of Example 1 except that, in the step of molding the silica glass in the predetermined form by pressing the silica glass without performing the foregoing preheating by way of the hold temperature of 1630°C using the silica glass containing the OH groups in a concentration of 900 ppm by mass, and except that the pressures shown in Table 1 were used as the pressure at each stage and the maximum pressure.

### (Example 4)

The plate-like body of the silica glass 25 was obtained in the same manner as that of Example 1 except that, in the step of molding the silica glass in the predetermined form by pressing the silica glass by way of the hold temperature of 1630°C using the silica glass containing the OH groups in a concentration of 900 ppm by mass, the pressures shown in Table 1 were used as the pressure at each stage and the maximum pressure, and except that, in the step of cooling the molded silica glass, cooling rates were controlled to be 3°C/min within a temperature range of 1600°C to 1200°C, 3°C/min within 1200°C to 800°C, and 10°C/min within 800°C to 100°C to force the silica glass to cool.

### (Comparative example 1)

The plate-like body of the silica glass 25 was obtained in the same manner as that of Example 1 except that, in the step of molding the silica glass in the predetermined form by pressing the silica glass without performing the foregoing preheating by way of the hold temperature of 1700°C, the pressures shown in Table 1 were used as the pressure at each stage and the maximum pressure.

### (Comparative example 2)

The plate-like body of the silica glass was obtained in the same manner as that of Example 1 except that, in the step of molding the silica glass in the predetermined form by pressing the silica glass by way of the hold temperature of 1700°C, the pressures shown in Table 1 were used as the pressure at each stage and the maximum pressure, and except that, in the step of cooling the molded silica glass, cooling rates were controlled to be 3°C/min within a temperature range of 1600°C to 1200°C, 3°C/min within 1200°C to 800°C, and 10°C/min within 800°C to 100°C to force the silica glass to cool.

### (Comparative example 3)

The plate-like body of the silica glass was obtained in the same manner as that of Example 1 except that, in the step of molding the silica glass in the predetermined form by pressing the silica glass by way of the hold temperature of 1650°C, the pressures shown in Table 1 were used as the pressure at each stage and the maximum pressure, and except that, in the step of cooling the molded silica glass, cooling rates were controlled to be 3°C/min within a temperature range of 1600°C to 1200°C, 3°C/min within 1200°C to 800°C, and 10°C/min within 800°C to 100°C to force the silica glass to cool.

### (Comparative example 4)

The plate-like body of the silica glass was obtained in the same manner as that of Example 1 except that, in the step of molding the silica glass in the predetermined form by pressing the silica glass, the pressures shown in Table 1 were used as the pressure at each stage and the maximum pressure, and except that, in the step of cooling the molded silica glass, cooling rates were controlled to be 3°C/min within a temperature range of 1600°C to 1200°C, 3°C/min within 1200°C to 800°C, and 10°C/min within 800°C to 100°C to force the silica glass to cool.

### (Comparative example 5)

The silica glass was molded under conditions shown in Table 1 using the silica glass containing the OH groups in a concentration of 800 ppm by mass. However, the viscosity thereof was too high at 1630°C to mold it conforming to the form of the mold, resulting in the formation of a large R at the corner. Therefore, this results in having an inferior shape.

### (Comparative example 6)

The silica glass was molded under conditions shown in Table 1 using the silica glass containing the OH groups in a concentration of 1400 ppm by mass. However, the viscosity thereof was too low at 1530°C that the surface of the glass was bent inside during molding, resulting in the formation of an inferior shape.

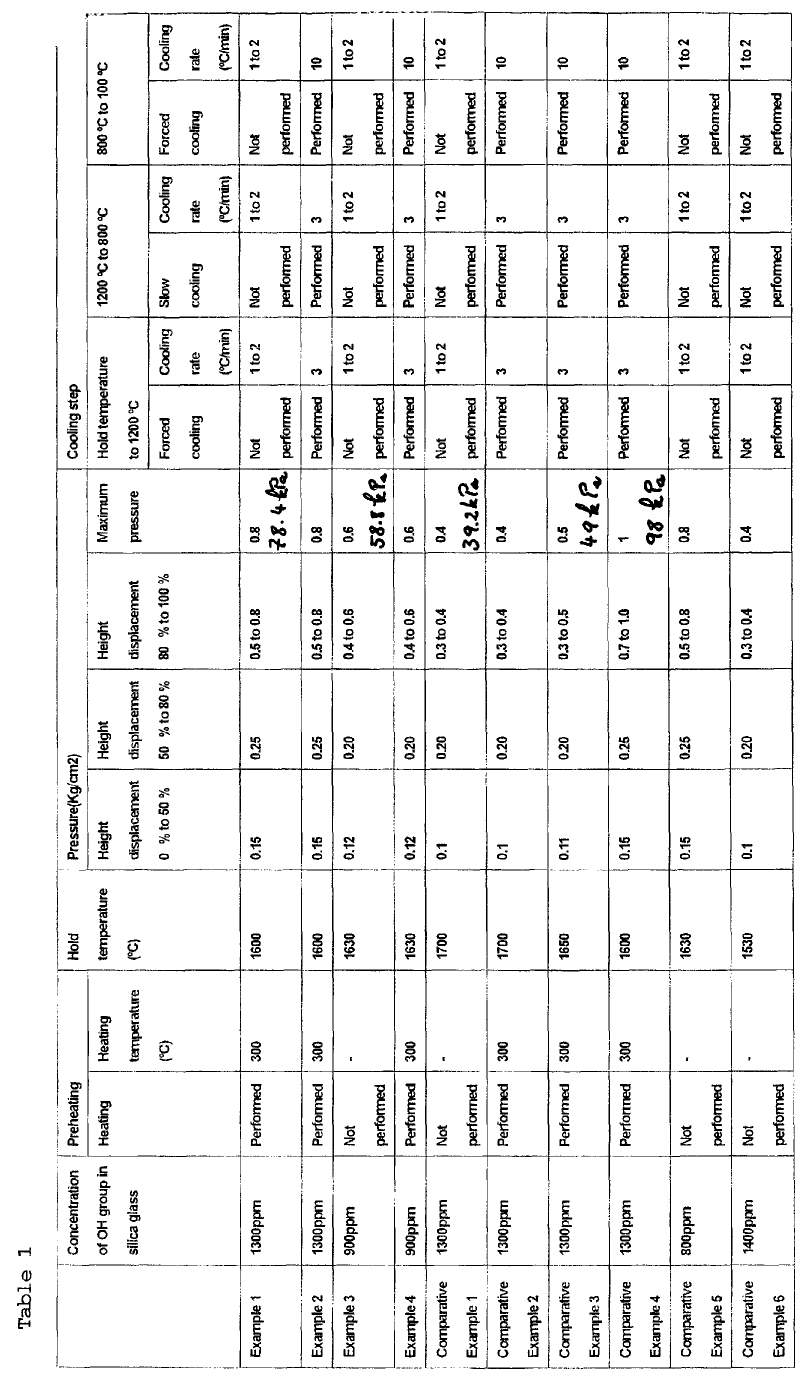

### (Measurement of birefringence)

A birefringence was measured with respect to each silica glass molded in a plate-like form in Examples 1 to 4, and in Comparative examples 1 to 4. That is, the birefringence was measured at intervals of 5 mm in a grid pattern using ABR (available from UNIOPT Ltd.) as a measurement apparatus for the birefringence. The maximum measured value was designated as the birefringence value. The results obtained are shown in Table 2.

### (Evaluation of a laser resistance)

Evaluation of a laser resistance was performed with respect to each silica glass molded in a plate-like form in Examples 1 to 4, and in Comparative examples 1 to 4. That is, the KrF laser beams with 50 mJ/cm²/pulse were irradiated in an oscillating frequency of 100 Hz for 5 minutes to observe the change in light transmission. The silica glass in which the change in light transmission was not observed (1% or less of change ratio) was evaluated as Excellent. The silica glass in which the change in light transmission was observed (more than 1% of change rate) was evaluated as Non-excellent. The results obtained are shown in Table 2.

### (Measurement of the thickness of an affected layer)

The thickness of an affected layer was measured with respect to each silica glass molded in a plate-like form in Examples 1 to 4, and in Comparative examples 1 to 4. That is, only light beams having a wavelength of 254 nm were extracted from the output of the mercury lamp using a band pass filter to irradiate them on the sample. At this time, a fluorescent light which the sample had emitted was observed with naked eyes, and the thickness of the portion in which the emitted fluorescent light was observed was measured. The measurement was designated as the thickness (mm) of the affected layer. The results obtained are shown in Table 2.

**Table 2**

| | Birefringence (nm/cm) | Laser Resistance | Thickness of Affected Layer (mm) |
|---|---|---|---|
| Example 1 | 1.2 | Excellent | 7 |
| Example 2 | 1.5 | Excellent | 5 |
| Example 3 | 1.4 | Excellent | 8 |
| Example 4 | 1.7 | Excellent | 7 |
| Comparative Example 1 | 7.9 | Non-excellent | 20 |
| Comparative Example 2 | 8.5 | Non-excellent | 18 |
| Comparative Example 3 | 1.9 | Non-excellent | 13 |
| Comparative Example 4 | 1.2 | Excellent | 11 |

It was seen that the plate-like body of silica glass obtained in Examples 1 to 4 had a small birefringence, and a small thickness of the affected layer. It also was seen that the plate-like body of silica glass obtained in Examples 1 to 4 had an excellent laser resistance. Furthermore, it was seen that the plate-like body of silica glass obtained in Examples 1 to 4 did not incur a breakage failure, and received such a reduced stress from the mold as to be molded with a high yield.

On the other hand, the plate-like body of silica glass obtained in Comparative examples 1 to 4 had a large birefringence, and a large thickness of the affected layer. The plate-like body of silica glass obtained in Comparative examples 1 to 3 had an inferior laser resistance.

### Industrial Applicability

As described above, the present invention makes it possible to provide a method of molding a silica glass in which the time for which the silica glass is exposed to high temperatures can be reduced, and thereby the silica glass having an excellent laser resistance, the reduced thickness of the affected layer, and the small birefringence can be obtained surely and with high efficiency, although it is a method of molding a silica glass by pressing it while heating.

Therefore, the silica glass obtained by the method of molding a silica glass according to the present invention is useful as a material used to produce a lens, a mirror, and a substrate for a reticle on which a laser with a wavelength of 250 nm or less is irradiated, and preferably useful as various kinds of optical members such as a substrate for a reticle (photomask) such as a mask for a large-sized liquid crystal, and a mask for a semiconductor, a plate-like body having a large area used as a material of a large-sized lens of imaging optics and the like, and as other large-sized glass block.

## Claims

1. A method of molding a silica glass (25), comprising:
a first step of accommodating the silica glass (25) containing OH groups in a concentration of 900 ppm to 1300 ppm by mass in a hollow portion (21) of a mold (15) provided with a press portion (23, 26);
a second step of molding the silica glass (25) into a predetermined form by pressing the same by means of the press portion (23 26) so that a maximum pressure can be 19.6 kPa (0.2 Kg/cm²) to 78.4 kPa (0.8 Kg/cm²) while heating the silica glass (25) so that the temperature of the same can be within a hold temperature range of 1530°C to 1630°C; and
a third step of cooling the molded silica glass (25).

2. The method of molding a silica glass (25) according to claim 1, wherein, in the second step, the pressures applied at an early stage at which a height displacement of the silica glass (25) is within a range of 0% to 50%, at an intermediate stage at which the same is within a range of 50% to 80%, and at a final stage at which the same is within a range of 80% to 100%, are increased in a stepwise fashion so as to be 7% to 25%, 25% to 60%, and 60% to 100% of the maximum pressure, respectively.

3. The method of molding a silica glass (25) according to claim 1, wherein, in the third step, a cooling rate within a temperature range of the hold temperature to 1200°C is 2°C/min to 3.5°C/min.

4. The method of molding a silica glass (25) according to claim 3, wherein, in the third step, the cooling rate within a temperature range of 1200°C to 800°C is 1°C/min to 8°C/min.

5. The method of molding a silica glass (25) according to claim 4, wherein, in the third step, the cooling rate within a temperature range of 800°C to 100°C is 4°C/min to 15°C/min.

6. The method of molding a silica glass (25) according to claim 1, further comprising a pretreatment step of preheating the silica glass (25) so that the temperature of the silica glass (25) can be within a temperature range of 200°C to 300°C before accommodating the silica glass (25) in the hollow portion (21) of the mold (15).

7. The method of molding a silica glass (25) according to claim 1, wherein, in the second step, the hollow portion (21) is under an inert gas atmosphere.

## Patentansprüche

1. Ein Verfahren zum Formen von Quarzglas (25), aufweisend:
einen ersten Schritt des Aufnehmens des Quarzglases (25), das OH-Gruppen in einer Konzentration von 900 ppm bis 1300 ppm bezogen auf die Masse enthält, in einem hohlen Abschnitt (21) einer Form (15), die mit einem Pressabschnitt (23, 26) versehen ist,
einen zweiten Schritt des Formens des Quarzglases (25) zu einer vorbestimmten Form durch Pressen desselben mittels des Pressabschnitts (23, 26), so dass ein Maximaldruck 19,6 kPa (0,2 kg/cm²) bis 78,4 kPa (0,8 kg/cm²) betragen kann, wobei das Quarzglas (25) erhitzt wird, so dass die Temperatur desselben innerhalb eines Haltetemperaturbereichs von 1530°C bis 1630°C liegen kann, und
einen dritten Schritt des Abkühlens des geformten Quarzglases (25).

2. Das Verfahren zum Formen eines Quarzglases (25) gemäß Anspruch 1, wobei im zweiten Schritt der Druck, der in einem frühen Stadium, in dem eine Höhenverschiebung des Quarzglases (25) in einem Bereich von 0% bis 50% liegt, in einem Zwischenstadium, in dem diese innerhalb eines Bereichs von 50% bis 80% liegt, und in einem Endstadium, in dem diese innerhalb eines Bereichs von 80% bis 100% liegt, aufgebracht wird, schrittweise erhöht wird, um 7% bis 25%, 25% bis 60% bzw. 60% bis 100% des maximalen Drucks zu betragen.

3. Das Verfahren zum Formen eines Quarzglases (25) gemäß Anspruch 1, wobei im dritten Schritt eine Abkühlgeschwindigkeit innerhalb eines Temperaturbereichs der Haltetemperatur auf 1200°C 2°C/min bis 3,5°C/min beträgt.

4. Das Verfahren zum Formen eines Quarzglases (25) gemäß Anspruch 3, wobei im dritten Schritt die Abkühlgeschwindigkeit innerhalb eines Temperaturbereichs von 1200°C bis 800°C 1°C/min bis 8°C/min beträgt.

5. Das Verfahren zum Formen eines Quarzglases (25) gemäß Anspruch 4, wobei im dritten Schritt die Abkühlgeschwindigkeit innerhalb eines Temperaturbereichs von 800°C bis 100°C 4°C/min bis 15°C/min beträgt.

6. Das Verfahren zum Formen eines Quarzglases (25) gemäß Anspruch 1, ferner aufweisend einen Vorbehandlungsschritt zum Vorheizen des Quarzglases (25), so dass die Temperatur des Quarzglases (25) innerhalb eines Temperaturbereichs von 200°C bis 300°C liegen kann, bevor das Quarzglas (25) in dem hohlen Abschnitt (21) der Form (15) aufgenommen wird.

7. Das Verfahren zum Formen eines Quarzglases (25) gemäß Anspruch 1, wobei sich der hohle Abschnitt (21) im zweiten Schritt in einer Inertgas-Atmosphäre befindet.

## Revendications

1. Procédé de moulage d'un verre de silice (25), comprenant :
une première étape d'agencement du verre de silice (25) contenant des groupes OH dans une concentration de 900 ppm à 1300 ppm en masse dans une partie creuse (21) d'un moule (15) muni d'une partie de compression (23, 26) ;
une deuxième étape de moulage du verre de silice (25) dans une forme prédéterminée en comprimant celui-ci au moyen de la partie de compression (23, 26) de sorte qu'une pression maximale puisse être de 19,6 kPa (0,2 kg/cm²) à 78,4 kPa (0,8 kg/cm²) tout en chauffant le verre de silice (25) de sorte que la température de celui-ci puisse être maintenue dans un domaine de température de 1530°C à 1630°C; et
une troisième étape de refroidissement du verre de silice moulé (25).

2. Procédé de moulage d'un verre de silice (25) selon la revendication 1, où, dans la deuxième étape, les pressions appliquées à un stade précoce dans lequel un déplacement vertical du verre de silice (25) est compris dans un domaine de 0 % à 50%, à un stade intermédiaire dans lequel celui-ci est compris dans un domaine de 50 % à 80 %, et dans un stade final dans lequel celui-ci est compris dans un domaine de 80 % à 100 %, sont augmentées d'une manière étagée de manière à être de 7 % à 5 %, 25 % à 60 %, et 60 % à 100 % de la pression maximale, respectivement.

3. Procédé de moulage d'un verre de silice (25) selon la revendication 1, où, dans la troisième étape, une vitesse de refroidissement comprise dans un domaine de température de la température maintenue à 1200°C est de 2°C/min à 3,5°C/min.

4. Procédé de moulage d'un verre de silice (25) selon la revendication 3, où, dans la troisième étape, la vitesse de refroidissement comprise dans un domaine de température de 1200°C à 800°C est de 1°C/min à 8°C/min.

5. Procédé de moulage d'un verre de silice (25) selon la revendication 4, où, dans la troisième étape, la vitesse de refroidissement comprise dans un domaine de température de 800°C à 100°C est de 4°C/min à 15°C/min.

6. Procédé de moulage d'un verre de silice (25) selon la revendication 1, comprenant en outre une étape de prétraitement de préchauffage du verre de silice (25) de sorte que la température du verre de silice (25) puisse être comprise dans un domaine de température de 200°C à 300°C avant l'agencement du verre de silice (25) dans la partie creuse (21) du moule (15).

7. Procédé de moulage d'un verre de silice (25) selon la revendication 1, où, dans la deuxième étape, la partie creuse (21) est sous une atmosphère de gaz inerte.
